# EUROPEAN PATENT SPECIFICATION

(11) **EP 1 943 756 B1**
(45) Date of publication and mention of the grant of the patent: **12.03.2014**
(21) Application number: 06796051.8
(22) Date of filing: 11.10.2006
(51) Int. Cl.: H04B 10/50

(54) **COMMUNICATION SYSTEMS**
KOMMUNIKATIONSSYSTEME
SYSTEMES DE COMMUNICATION

(30) Priority: 13.10.2005 IE 20050693
(43) Date of publication of application: 16.07.2008
(73) Proprietor: University College Cork-National University of Ireland, Cork, Cork (IE)
(72) Inventor: ELLIS, Andrew, Ballincolig (IE); GUNNING, Fatima, Cork (IE); HEALY, Tadhg, Cork (IE)
(74) Representative: Weldon, Michael James
(86) International application number: PCT/IE2006/000109
(87) International publication number: WO 2007/043032

(56) References cited:
- EP-A- 1 355 435
- EP-A2- 0 901 244
- WO-A-2004/032386
- US-A- 6 067 180
- US-A1- 2004 197 103

## Description

### Field of the Invention

The invention relates to processing of optical signals in communication systems.

### Prior Art Discussion

Coherent WDM is a technique applied to communication systems with high information spectral density (ISD). In Coherent WDM, the relative optical phase of signals carried on adjacent wavelengths is fixed, such that any interference effects, which impact the channels, are also fixed, and may be beneficially used to enhance the system performance. The technique is described in the following references:
1. A. D. Ellis, F. C. Gunning, "Coherent WDM, towards > 1 bit/s/Hz information spectral density", Opto Ireland 2005 (Royal Dublin Society, Dublin, Ireland, 4-6 April 2005)
2. A.D.Ellis, F.C.G.Gunning, "Achievement of 1 bit/s/Hz Information Spectral Density Using Coherent WDM", Proc. OFC 2005, Paper OThR4, 2005.
3. A.D.Ellis, F.C.G.Gunning, "Spectral Density Enhancement using Coherent WDM", Photonics Technol. Lett. Vol. 17, No. 2, 504-506, Feb 2005.
4. A.D.Ellis, F.C.G.Gunning, "Filter strategies for Coherent WDM", Proc. ETOS, 26th-29th July, Cork, 2004.

In these prior publications, it is assumed that the phase difference between the signals is zero, and that optical filters used to extract (demultiplex) the signal carried by a particular wavelength efficiently reject distantly spaced wavelengths. For closely spaced signals, Coherent WDM anticipates that some power from adjacent channels will also pass this demultiplexing filter, and it controls the phase of the resulting crosstalk to maximise the system performance. In particular, when an asymmetric Mach Zehnder interferometer (AMZI) is used to eliminate most of the power from the nearest neighbour channels, and a broadband filter is used to eliminate most distant channels, a portion of the power from the nearest neighbours leaks through the filters. For example, if looking at channel 4, the AMZI removes most of the power from odd numbered channels (channels 1, 3 and 5 etc) and passes most of the power from even numbered channels (channel 0, 2, 4, 6 etc). The second filter is designed to pass channel 4 alone and, in practice, it attenuates channels 2 and 6, and eliminates channels 0, 8, 10 etc. We are thus left with residual crosstalk from the centre of the optical spectrum of channels 2 & 6, which have passed through the peak of the AMZI, and with residual crosstalk from the edges, or wings of the optical spectrum of channels 3 and 5, which the central (high power) portions were removed by the AMZI. For non return to zero (NRZ) formatted channels, when the residual power from channels 2 and 6, which include strong carrier components, interfere with channel 4, a beat frequency at twice the channel spacing is observed, along with crosstalk from the data content of the channel. The residual power from channels 3 and 5 similarly produces crosstalk from the data content of the channel.

Secondly, whilst the simple argument for Coherent WDM states that the eye is opened by coherent interference between adjacent channels, this is not strictly true after the AMZI filter has partially removed the nearest neighbour channels. What remains from the spectral wings of the adjacent channels is still well controlled interference, due to the coherent nature of the signals, but the precise nature of the interference is much more complicated to analyse.

Consider by way of example a 280 Gbit/s Coherent WDM system, generated using seven 40 Gbit/s channels. Figure A shows the eye diagrams at the output of the transmitter of such a Coherent WDM signal, aligned according to the description of the prior publications; and Figure B shows the resulting demultiplexed signal plots. It is noted that the eye height is compromised by the oscillation, which results from crosstalk.

It may be inferred from the prior art that there are several different phases, or delays, which need to be optimised within the transmitter of this system. In order to obtain the signal of Figure A, the transmitter should be aligned as follows:
1. Arranging for the data signal delays on the even numbered channels to align with, for example, the 80 GHz beat frequency (or twice the data rate) between the even numbered comb lines, such that the eye crossing of each data signal is aligned to the maximum of one of the 80 GHz cycles, similarly (but harder to measure) the eye opening.
2. Aligning the data delay for odd numbered channels to the odd numbered comb in the same way.
3. Aligning the relative delay between even and odd numbered channels such that all of the eye crossings are aligned.
4. Stabilising the optical phase and signal polarisations such that the interference signal is maximised. Ideally, the intensity at the eye crossing should vary quadratically with the level number; in a non-coherent system it would vary linearly with level number.

The characteristic features of Figure A are therefore a strongly return to zero shaped multileveled signal at the eye centre (centre of Figure A), where the amplitude of the signal varies quadratically with the number of channels transmitting a data "one". A complementary area between adjacent eye centres, where transitions between data "ones" and data "zeros" for all of the channels occur, appears as a shaped burst of noise.

However, when a system is aligned according to this strategy, giving the clearest eye opening at the transmitter, and is then demultiplexed using an AMZI, or another filter with a similar transfer function, the received eye diagram (Figure B) shows significant distortion. There is therefore a need for enhanced alignment techniques to achieve performance improvements, such as when an AMZI is used as a receiver. In particular, the transmitter alignment should be pre-distorted to match characteristics of the receiver.

The characteristic features of Figure B are a residual sine wave signal at twice the channel frequency (80 GHz in this example) superimposed on the data of the demultiplexed channel. Note that the centre of the eye diagram (the decision point) aligns with a minimum point in the residual 80 GHz signal, reducing the overall performance of the system (Q factor). This is in stark contrast to Figure A, where the interference signals appear well controlled and the data.and sine wave oscillations are aligned.

US2004/0197103 describes compensation of nonlinearity-induced signal distortions.

WO2004/032386 describes compensation of polarization dependent effects by processing in the electrical domain, prior to transmission.

### SUMMARY OF THE INVENTION

According to the invention, there is provided a data transmitter as set out in claim 1

In another aspect, the invention provides a method of transmitting multiplexed signals as set out in claim 7

In one embodiment, the transmitter tunes the phases according to a scheme to maximise Q-factor at the receiver.

In one embodiment, the transmitter tunes the phases according to characteristics of a receiver filter in the optical path.

In a further embodiment, the transmitter tunes the phases according to characteristics of optical fibre in the optical path.

In one embodiment, the transmitter adds a relative delay between the data signal and the beat frequency signal for odd and even channel groups to counter receiver delays introduced by a filter such as an AMZI filter.

In one embodiment, a ¼ bit period delay is added by the transmitter.

### DETAILED DESCRIPTION OF THE INVENTION

### Brief Description of the Drawings

The invention will be more clearly understood from the following description of some embodiments thereof, given by way of example only with reference to the accompanying drawings in which:-

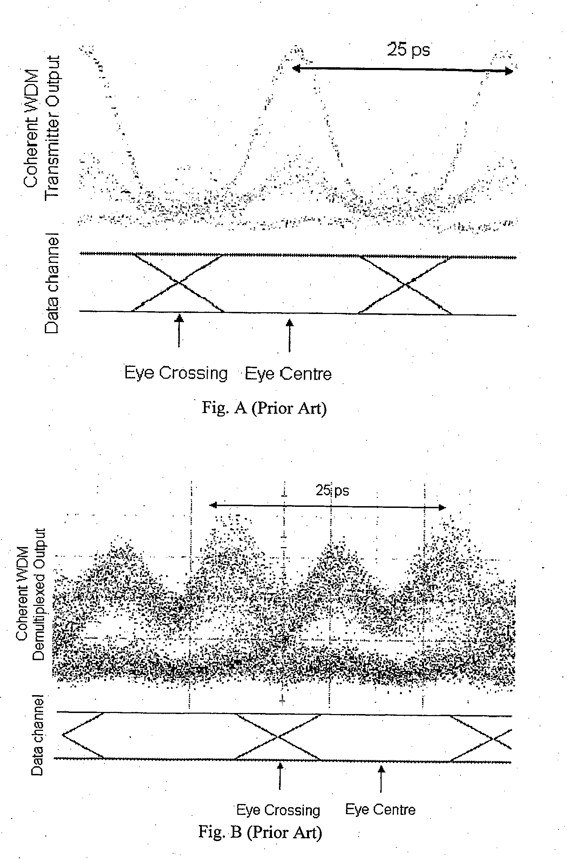

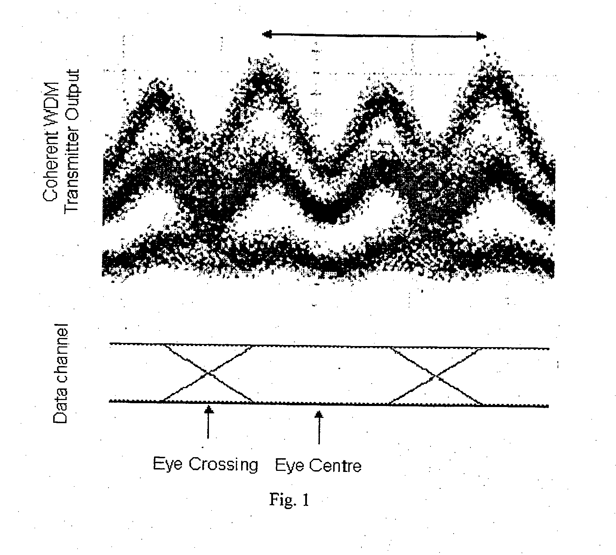

Figures 1 to 7 are plots illustrating aspects of operation of the invention.

### Description of the Embodiments

In the invention, a transmitter transmits signals on multiple channels, and they are wavelength multiplexed according to Coherent WDM. In other embodiments such a wavelength multiplexed signal may be generated according to different schemes, such as closely spaced sub-carrier multiplexing and indeed they may be multiplexed in the electrical domain and converted to optical according to a scheme such as Orthogonal Frequency Division Multiplexing (OFDM). Equality of the received signals is very much enhanced by tuning the relative phases of neighbouring channels according to delay characteristics of the optical path..

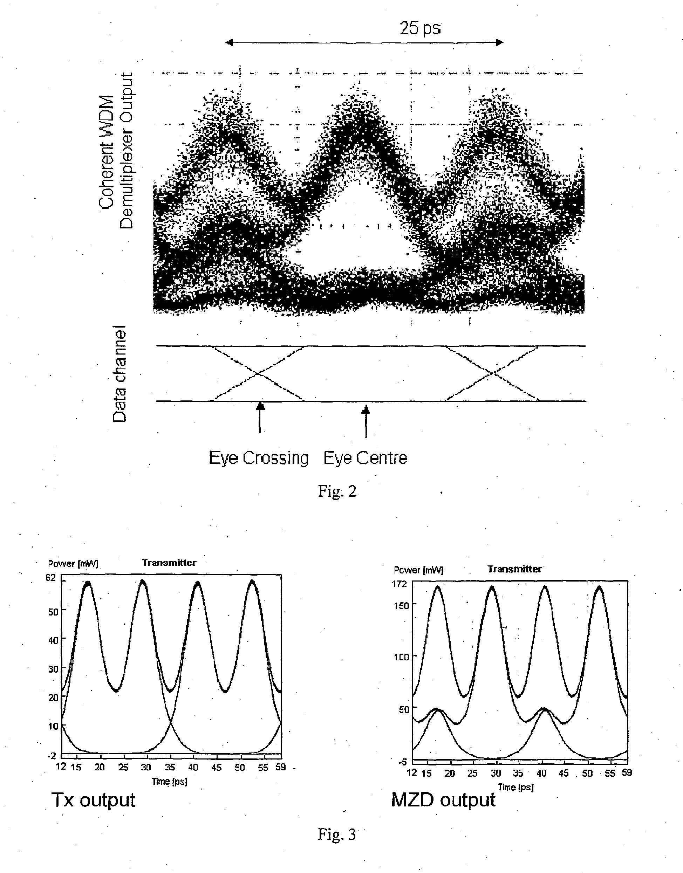

Alignment strategies to tune the relative phases are based on the delay properties of the transmission link and the particular filters used within the receiver. By way of example, we consider the filter described in the prior art, namely an AMZI used to demultiplex the data. For typical operation in a Coherent WDM system, the AMZI has a free spectral range equal to twice the channel spacing (which in turn equals the system clock frequency). Fig. 1 shows the output of the transmitter, and Fig. 2 shows the output of the demultiplexer, both when the transmitter is aligned according to the invention.

Referring again to Figure B, signal features are as follows:
- the data pattern of the target channel, two periods are shown, with a left and a right eye diagram,
- an oscillation of the "one" level at 80 GHz,
- residual crosstalk,
and, the alignment of the data signal and the clock signal have been skewed by the action of the demultiplexing AMZI filter, such that the centre of the eye aligns with the minimum point of the residual 80 GHz beat signal, reducing the Q factor.

It is our understanding that this misalignment after detection is a direct consequence of the delay properties of the AMZI, which has a delay of half of the signal bit period (12.5ps for a 40 Gbit/s signal). The output signal comprises the interference between an un-delayed copy of the signal entering the AMZI, and a copy of the signal delayed by half of the bit period. For a data signal, the result of this interference is to impose a net delay to the rising and falling edges equal to the mean delay of the two arms, or 6.25 ps (¼ of the bit period) in this example. This is because the half power point of the rising edge of pulses exiting the AMZI should correspond to the interference between the "zero" level of the un-delayed copy and the "one" level of the delayed copy of pulses entering the AMZI. In the case of an 80 GHz sine wave signal, the 12.5 ps delay corresponds to one oscillation period, and so the output is a simple in phase addition of two infinite sine waves, and no net phase shift is experienced. As we have seen above, the characteristic features of a Coherent WDM signal are a combination of data signals representing the information for each channel, sine wave signals representing the beating between carrier components of each channel, and residual crosstalk. Thus the action of the AMZI is to alter the relative delays of the components of Coherent WDM, reducing the benefits of the alignment strategy suggested by the prior art. This behaviour may also be understood from the group delay characteristics of the AMZI, and the techniques of the invention may be generalised using such characteristics.

In this example, the invention provides the following modified alignment strategy, assuming the transmitter is initially aligned as described above.
1. At the transmitter, add a relative delay of ¼ bit period between each data signal and the beat frequency signal for the odd and even channel groups, to counter the receiver side delays introduced by the AMZI. This corresponds to aligning the transmitter such that the eye crossing corresponds to a minimum of the 80 GHz beat signal. In order to obtain a stable phase relationship between adjacent channels the 80 GHz tone is set to a particular value. Any harmonics or sub-harmonics will similarly vary with phase and therefore can also be used as an error signal for a phase stabilisation circuit. The phase stabilisation circuit in the transmitter therefore can maintain a desired stable optimum phase alignment between neighbouring channels.
2. In order to control the exact location of residual (static) interference terms after the AMZI demultiplexer the relative optical phases within the transmitter are adjusted from their initial values to pre-compensate for the expected delay characteristics of the transmission link and optical receiver.

This gives rise to an apparent degradation in the eye diagram at the transmitter, as shown in Fig. 1.However, after demultiplexing, the eye pattern, and hence system performance, is significantly improved, as is clear from Fig. 2.

This realignment of the phases of the data signals and the residual 80 GHz beat signal is confirmed in Fig. 3, a numerical simulation, where only even numbered channels are considered, but a similar AMZI is used within the receiver. Common features between this simulation and the observed transmitter and demultiplexed eye patterns of Figs. 1 and 2 are apparent.

In general terms, the transmitter data signal delays and optical phases are adjusted to take into account the group delay characteristics of the total optical path between the transmitter and the detector, namely the demultiplexing filter, the transmission fibre link, and any other components, such as optical amplifiers or wavelength routers added to the link to increase its functionality, in accordance with common practice.

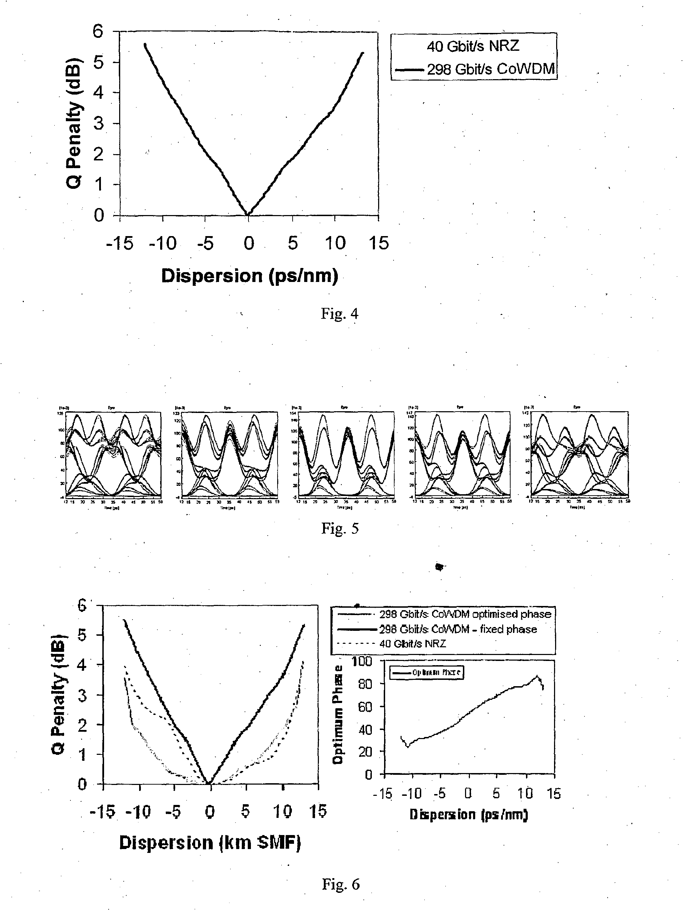

When a Coherent WDM signal is transmitted over long lengths of fibre, many experts in the telecommunications field would expect that such transmission would degrade, or even completely destroy, the phase relationship between the adjacent channels, eliminating any benefit from Coherent WDM. We have demonstrated that this is not the case, and the relative optical phases between the channels are largely preserved on transmission, allowing error free performance over 80 km of dispersion compensated fibre. Subsequent numerical modelling, as shown in Fig. 4, shows that the dispersion tolerance of a Coherent WDM system approaches the performance of a single wavelength signal of similar characteristics (with the same data rate on that wavelength as one of the Coherent WDM channels, the same rise time, extinction ratio etc). For the example considered, each modulator is driven at 42.6 Gbit/s, giving a total data rate of approximately 298 Gbit/s, and the phases within the transmitter are aligned for 0 ps/nm dispersion (back to back).

### Application of Coherent WDM

It is well known that the dispersion tolerance of a signal of bit rate B may be improved by a factor of N² by splitting the signal into N channels, each of bit rate B/N. These channels may then be transmitted over a Coherent WDM system with N channels. For example, the dispersion tolerance of a 40 Gbit/s signal (∼ 2-5km) may be increased close to that of a 10 Gbit/s signal (50-80km) by transmitting the data as a 5 channel Coherent WDM signal, with a bit rate of 8 Gbit/s per channel. This has several advantages of many alternative techniques. For example, when compared to various methods of pre-chirping the 40 Gbit/s signal, the use of Coherent WDM offers enhanced performance, whilst using lower speed and less expensive electronics and opto-electronic components. When compared to using conventional WDM technology, the use of Coherent WDM does not increase the overall spectral width of the signal.

The impact of dispersion on a Coherent WDM system is illustrated in Fig. 5, below which shows, from left to right, the output of the demultiplexing filters for the centre channel with a net dispersion of -10 ps/nm, -5 ps/nm , 0 ps/nm, +5 ps/nm and +10 ps/nm. It is apparent from Fig. 5 that the nature of the interference is changing, especially as the level of dispersion increases. This is, of course, entirely due to the relative phases of the various components of the signal. Indeed between -5 ps/nm and +5 ps/nm the variation in eye width is negligible when compared to the changes in the residual 80 GHz signal and the crosstalk. The distortion may be broken down into changes in the relative phase of the 80 GHz beat signal, changes in the location of the residual crosstalk, and changes in the shape of the central portion of the eye.

### Dispersion mitigation for Coherent WDM

Coherent WDM offers the simple possibility of pre-distorting the signals to allow for the delay characteristics of the intermediate components. We thus propose that the transmission performance of a Coherent WDM signal may be enhanced by optimising the relative delays of the data signals with respect to the beat signals, and by optimising the relative optical phases of adjacent channels in order to maximise the eye opening, and minimise the crosstalk respectively. The success of optimising the optical phase as a function of dispersion is shown in Fig. 6.

In this case, up to 2 dB Q factor improvement may be achieved by optimising the relative optical phase alone, resulting in a performance very similar to the 40 Gbit/s single channel case. Significant phase changes of up to 1 radian (∼60°) are required to achieve this optimum performance. Such Q factor improvement may be used in many ways, including, for example, the increase in loss of the link (by adding more fibre, or as a margin for ageing), or by the increase of the number of WDM channels transmitted at a fixed maximum total power.

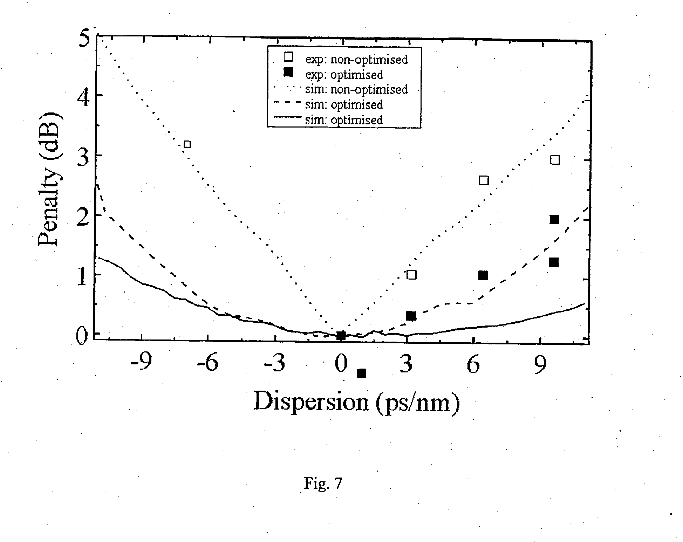

Fig. 7 is a plot of Penalty vs. Dispersion, showing experimental points which back up the simulation results of Figs. 4 to 6.

Similar improvements may also be expected by optimising the phase between the data signals and the 80 GHz beat signals.

The invention is not limited to the embodiments described but may be varied in construction and detail. For example, it may be applied to optical data multiplexing schemes other than Coherent WDM.

## Claims

1. A data transmitter for transmitting wavelength multiplexed signals on an optical path to a receiver according to Coherent WDM in which relative optical phases of signals carried on adjacent wavelengths are preserved, **characterized in that** the transmitter is adapted to tune the relative signal data and signal carrier phases between signals according to delay characteristics of the optical path.

2. A data transmitter as claimed in claim 1, wherein the transmitter is adapted to tune the phases according to a scheme to maximise Q-factor at the receiver.

3. A data transmitter as claimed in either of claims 1 or 2, wherein the transmitter is adapted to tune the phases according to characteristics of a receiver filter in the optical path.

4. A data transmitter as claimed in any preceding claim, wherein the transmitter is adapted to tune the phases according to characteristics of optical fibre in the optical path.

5. A data transmitter as claimed in any preceding claim, wherein the transmitter is adapted to add a relative delay between the data signal and the beat frequency signal for odd and even channel groups to counter receiver delays introduced by a filter such as an AMZI filter.

6. A data transmitter as claimed in claim 5, wherein a ¼ bit period delay is added.

7. A method of transmitting multiplexed signals on an optical path from a transmitter to a receiver according to Coherent WDM, in which relative optical phases of signals carried on adjacent wavelengths are preserved, **characterized in that** the transmitter tunes the relative signal data and signal carrier phases between signals according to delay characteristics of the optical path.

8. A method as claimed in claim 7, wherein the transmitter tunes the phases according to a scheme to maximise Q-factor at the receiver.

## Patentansprüche

1. Datensender zum Senden von wellenlängenmultiplexierten Signalen auf einem Strahlengang zu einem Empfänger gemäß kohärenter WDM-Technik, wobei relative optische Phasen von auf benachbarten Wellenlängen geführten Signalen konserviert werden, **dadurch gekennzeichnet, dass** der Sender so ausgelegt ist, dass er die relativen Signaldaten- und Signalträgerphasen zwischen Signalen gemäß Verzögerungskennwerten des Strahlengangs abstimmt.

2. Datensender nach Anspruch 1, wobei der Sender zum Abstimmen der Phasen gemäß einem Schema zum Maximieren von Q-Faktor am Empfänger ausgelegt ist.

3. Datensender nach Anspruch 1 oder 2, wobei der Sender zum Abstimmen der Phasen gemäß Kennwerten eines Empfängerfilters in dem Strahlengang ausgelegt ist.

4. Datensender nach einem vorherigen Anspruch, wobei der Sender zum Abstimmen der Phasen gemäß Kennwerten von Lichtleitfaser in dem Strahlengang ausgelegt ist.

5. Datensender nach einem vorherigen Anspruch, wobei der Sender zum Addieren einer relativen Verzögerung zwischen dem Datensignal und dem Schwebungsfrequenzsignal für ungeradzahlige und geradzahlige Kanalgruppen ausgelegt ist, um von einem Filter wie einem AMZI-Filter eingeführten Empfängerverzögerungen entgegenzuwirken.

6. Datensender nach Anspruch 5, wobei eine ¼-Bitzeitenverzögerung addiert wird.

7. Verfahren zum Senden von multiplexierten Signalen auf einem Strahlengang von einem Sender zu einem Empfänger gemäß kohärenter WDM-Technik, wobei relative optische Phasen von auf benachbarten Wellenlängen geführten Signalen konserviert werden, **dadurch gekennzeichnet, dass** der Sender die relativen Signaldaten- und Signalträgerphasen zwischen Signalen gemäß Verzögerungskennwerten des Strahlengangs abstimmt.

8. Verfahren nach Anspruch 7, wobei der Sender die Phasen gemäß einem Schema zum Maximieren von Q-Faktor am Empfänger abstimmt.

## Revendications

1. Un émetteur de données pour l'émission de signaux multiplexés en longueur d'onde sur un trajet optique vers un récepteur selon un WDM cohérent dans lequel des phases optiques relatives de signaux transportés sur des longueurs d'onde adjacentes sont conservées, **caractérisé en ce que** l'émetteur est adapté de façon à accorder les données de signal relatives et des phases de porteuse de signal entre signaux en fonction de caractéristiques de retard du trajet optique.

2. Un émetteur de données selon la Revendication 1, où l'émetteur est adapté de façon à accorder les phases en fonction d'un mécanisme destiné à maximiser un facteur Q au niveau du récepteur.

3. Un émetteur de données selon l'une quelconque des Revendications 1 ou 2, où l'émetteur est adapté de façon à accorder les phases en fonction de caractéristiques d'un filtre de récepteur dans le trajet optique.

4. Un émetteur de données selon l'une quelconque des Revendications précédentes, où l'émetteur est adapté de façon à accorder les phases en fonction de caractéristiques d'une fibre optique dans le trajet optique.

5. Un émetteur de données selon l'une quelconque des Revendications précédentes, où l'émetteur est adapté de façon à ajouter un retard relatif entre le signal de données et le signal de fréquence de battement pour des groupes de canaux pairs et impairs de façon à contrer des retards de récepteur introduits par un filtre tel qu'un filtre AMZI.

6. Un émetteur de données selon la Revendication 5, où un retard de période de ¼ de bit est ajouté.

7. Un procédé d'émission de signaux multiplexés sur un trajet optique d'un émetteur vers un récepteur selon un WDM cohérent, dans lequel des phases optiques relatives de signaux transportés sur des longueurs d'onde adjacentes sont conservées, **caractérisé en ce que** l'émetteur accorde les données de signal relatives et des phases de porteuse de signal entre signaux en fonction de caractéristiques de retard du trajet optique.

8. Un procédé selon la Revendication 7, où l'émetteur accorde les phases en fonction d'un mécanisme destiné à maximiser un facteur Q au niveau du récepteur.
